# EUROPEAN PATENT APPLICATION

(11) **EP 4 152 129 A1**
(43) Date of publication of application: **22.03.2023**
(21) Application number: 21822359.2
(22) Date of filing: 26.05.2021
(51) Int. Cl.: G06F 3/041, G06F 3/0354, G06F 3/038, G09G 5/12

(54) **ELECTRONIC DEVICE AND SYNCHRONIZATION METHOD BASED ON DISPLAY DRIVING SIGNAL IN ELECTRONIC DEVICE**

(30) Priority: 10.06.2020 KR 20200070370
(71) Applicant: Samsung Electronics Co., Ltd., Gyeonggi-do 16677 (KR)
(72) Inventor: OH, Wooyoung, Suwon-si Gyeonggi-do 16677 (KR); HONG, Sungwon, Suwon-si Gyeonggi-do 16677 (KR); LEE, Heonseok, Suwon-si Gyeonggi-do 16677 (KR); KIM, Yonghwan, Suwon-si Gyeonggi-do 16677 (KR); PARK, Sungsoo, Suwon-si Gyeonggi-do 16677 (KR)
(74) Representative: HGF
(86) International application number: PCT/KR2021/006553
(87) International publication number: WO 2021/251655

(57) **Abstract**

An electronic device according to various embodiments comprises: a display; a first sensor circuit; a second sensor circuit; and a processor electrically connected to the display, first sensor circuit and second sensor circuit. In the display, a first synchronization signal corresponding to a changed display driving signal is provided to the processor on the basis of the change in the display driving signal of the display, and a second synchronization signal different from the first synchronization signal is provided to the first sensor circuit and/or the second sensor circuit on the basis of the provision of the first synchronization signal. Other embodiments are also possible.

## Description

### [Technical Field]

Various embodiments relate to an electronic device and a synchronization method based on a display driving signal in the electronic device.

### [Background Art]

An electronic device may include a display device capable of displaying various types of information. The display device may include a liquid crystal display (LCD), an organic light emitting diode (OLED) display, or an electrophoretic display.

The display device may include an electric field generating electrode and an electro-optical active layer. The LCD may include a liquid crystal layer as an electro-optical active layer, the OLED display may include an organic light emitting layer as an electro-optical active layer, and the electrophoretic display may include charged particles. The electric field generating electrode may be connected to a switching device such as a thin film transistor to receive a data signal, and the electro-optical active layer may display an image by converting the data signal into an optical signal.

In addition to the image display function, the display device may include an input function (e.g., a touch or pen detection function) that enables interaction with a user. When the user writes a character or draws a picture by touching a finger or a touch pen on the screen, the touch or pen detection function detects a change in pressure, electric charge, light, or the like applied to a screen by the display device, and thus identify contact information such as whether an object has contacted the screen and the location of the contact. The electronic device may obtain an input signal based on the contact information and provide an output signal (e.g., an image signal) to be displayed on the display device based on the input signal. The touch or pen detection function may be implemented through at least one sensor. The at least one sensor may be classified into various types such as a resistive type, a capacitive type, an electro-magnetic (EM) type, and an optical type. The at least one sensor may include a pen sensor and a touch (or touch screen) sensor.

### [Detailed Description of the Invention]

### [Technical Problem]

In the electronic device, a display, a touch sensor, a pen sensor, and/or a processor may need synchronization so that the display device may receive an input from the user while displaying an image.

When the touch sensor for sensing a touch and the pen sensor for sensing a pen are simultaneously driven, interference may occur between the sensings. Therefore, the electronic device needs to prevent interference between the touch sensing and the pen sensing by making a touch sensing period and a pen sensing period independent of each other (not overlap with each other).

In some cases, a display driving signal requires use of a high frequency (e.g., 120Hz) as in a high-speed mode or another frequency, other than a specific frequency. In this case, when the touch sensing period and the pen sensing period based on the display driving signal are not independent of each other (overlap with each other), interference may occur between the periods.

Therefore, it may be necessary to reduce input errors by making the touch sensing period and the pen sensing period independent of each other regardless of the frequency of the display driving signal and thus minimizing interference between touch sensing and pen sensing.

### [Technical Solution]

According to various embodiments, an electronic device and a method of performing synchronization based on a display driving signal in the electronic device may be provided, which synchronize a display with touch sensing and pen sensing and thus prevent interference between the touch sensing and the pen sensing.

According to various embodiments, an electronic device and a method of performing synchronization based on a display driving signal in the electronic device may be provided, which make a touch sensing period and a pen sensing period based on a display driving signal independent of each other, even when the display driving signal has a high frequency as in a high-speed mode.

According to various embodiments, an electronic device and a method of performing synchronization based on a display driving signal in the electronic device may be provided, which change the frequency of a touch sensing driving signal and the frequency of a pen sensing driving signal to be independent of each other according to a change display driving signal, even when the frequency of the display driving signal is changed.

According to various embodiments, an electronic device may include a display, a first sensor circuit, a second sensor circuit, and a processor electrically connected to the display, the first sensor circuit, and the second sensor circuit. Based on a change in a display driving signal of the display, the display may provide a first synchronization signal corresponding to the changed display driving signal to the processor, and based on the provision of the first synchronization signal, a second synchronization signal different from the first synchronization signal may be provided to at least one of the first sensor circuit or the second sensor circuit.

According to various embodiments, an electronic device may include a display including a display driving integrated circuit (IC), a first circuit board including a touch sensor IC, and a second circuit board connected to the first circuit board and including a pen sensor and an application processor. Based on a change in a display driving signal of the display driving IC, the display driving IC may provide a first synchronization signal corresponding to the changed display driving signal to the application processor, and based on the provision of the first synchronization signal corresponding to the display driving signal, a second synchronization signal different from the first synchronization signal may be provided to at least one of the touch sensor IC or the pen sensor IC.

According to various embodiments, a method of providing a display-based synchronization signal in an electronic device may include, based on a change in a display driving signal, providing a first synchronization signal corresponding to the changed display driving signal to a processor of the electronic device by a display of the electronic device, and based on the provision of the first synchronization signal from the display, receiving a second synchronization signal different from the first synchronization signal by at least one of a first sensor circuit of the electronic device or a second sensor circuit of the electronic device.

### [Advantageous Effects]

According to various embodiments, a touch sensing period and a pen sensing period do not overlap with each other, while a display is synchronized with touch sensing and pen sensing in an electronic device. Therefore, no interference occurs between the touch sensing and the pen sensing.

According to various embodiments, even when a display driving signal has a high frequency as in a high-speed mode, a touch sensing period and a pen sensing period based on the display driving signal may be made independent of each other in an electronic device.

According to various embodiments, even when the frequency of a display driving signal is changed in an electronic device, the frequency of a touch sensing driving signal and the frequency of a pen sensing driving may be changed to be independent of each other according to the changed frequency of the display driving signal. Therefore, no interference may occur between touch sensing and pen sensing.

Effects achievable from the disclosure are not limited to what has been described above, and those skilled in the art will understand clearly other effects which have not been mentioned from the following description.

### [Brief Description of Drawings]

FIG. 1 is a block diagram illustrating an electronic device in a network environment according to an embodiment.
FIG. 2 is a block diagram illustrating a display device according to various embodiments.
FIG. 3a is a perspective view illustrating an electronic device including a pen input device according to an embodiment.
FIG. 3b is a diagram illustrating a relationship between an electronic device and a pen input device according to an embodiment.
FIG. 4 is a diagram illustrating a display driving circuit, a touch sensor circuit, a pen sensor circuit, and a processor in an electronic device according to an embodiment.
FIG. 5 is a diagram illustrating an example of signal processing among a display driving circuit, a touch sensor circuit, and a pen sensor circuit in an electronic device according to an embodiment.
FIG. 6 is a diagram illustrating an example of synchronization signals for a display driving circuit, a touch sensor circuit, and a pen sensor circuit in an electronic device according to an embodiment.
FIG. 7 is a diagram illustrating another example of signal processing among a display driving circuit, a touch sensor circuit, and a pen sensor circuit in an electronic device according to an embodiment.
FIG. 8 is a diagram illustrating another example of synchronization signals for a display driving circuit, a touch sensor circuit, and a pen sensor circuit in an electronic device according to an embodiment.
FIG. 9 is a diagram illustrating another example of signal processing among a display driving circuit, a touch sensor circuit, and a pen sensor circuit in an electronic device according to an embodiment.
FIG. 10 is a diagram illustrating another example of synchronization signals for a display driving circuit, a touch sensor circuit, and a pen sensor circuit in an electronic device according to an embodiment.
FIG. 11 is a diagram illustrating an operation of a processor based on a display driving signal according to an embodiment.
FIG. 12 is a diagram illustrating a signal flow for an example of operations of a display driving circuit, a touch sensor circuit, a pen sensor circuit, and a processor in an electronic device according to an embodiment.
FIG. 13 is a diagram illustrating a signal flow for another example of operations of a display driving circuit, a touch sensor circuit, a pen sensor circuit, and a processor in an electronic device according to an embodiment.
FIG. 14 is a diagram illustrating a signal flow for another example of operations a display driving circuit, a touch sensor circuit, a pen sensor circuit, and a processor in an electronic device according to an embodiment.

In relation to the description of the drawings, the same or similar reference numerals denote the same or similar components.

### [Mode for Carrying out the Invention]

The terms as used in the disclosure are provided to merely describe specific embodiments, not intended to limit the scope of other embodiments. Singular forms include plural referents unless the context clearly dictates otherwise. The terms and words as used herein, including technical or scientific terms, may have the same meanings as generally understood by those skilled in the art. The terms as generally defined in dictionaries may be interpreted as having the same or similar meanings as or to contextual meanings of the relevant art. Unless otherwise defined, the terms should not be interpreted as ideally or excessively formal meanings. Even though a term is defined in the disclosure, the term should not be interpreted as excluding embodiments of the disclosure under circumstances.

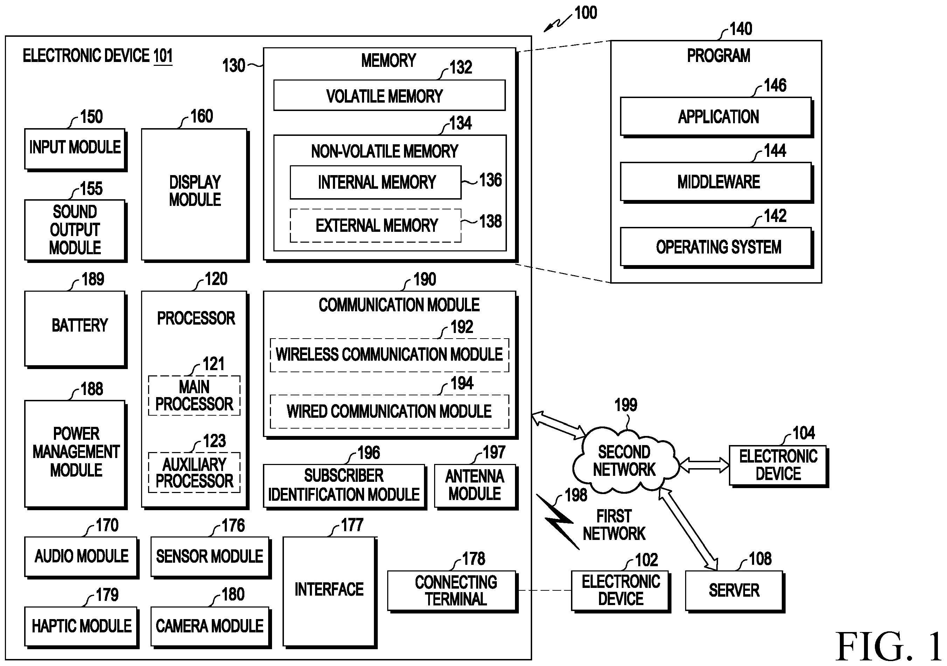

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

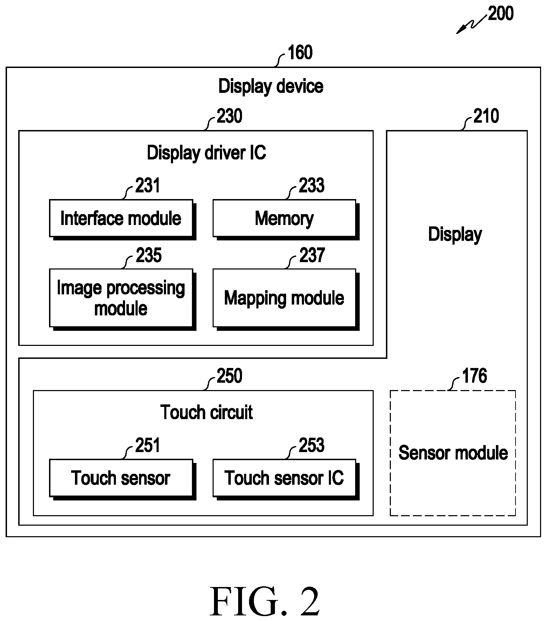

FIG. 2 is a block diagram 200 illustrating the display device 160 according to various embodiments.

Referring to FIG. 2, the display device 160 may include a display 210 and a display driver integrated circuit (DDI) (or a display driving circuit) 230 for controlling the display 210. The DDI 230 may include memory 233 (e.g., buffer memory), an image processing module 235, or a mapping module 237. The DDI 230 may receive image information including, for example, image data or an image control signal corresponding to a command for controlling the image data from another component of an electronic device (e.g., the electronic device 101 of FIG. 1) through the interface module 231. For example, according to an embodiment, the image information may be received from the processor 120 (e.g., the main processor 121) (e.g., an AP) or the auxiliary processor 123 (e.g., a graphic processing device) operated independently of the function of the main processor 121. The DDI 230 may communicate with a touch circuit 250 or the sensor module 176 through the interface module 231. Further, the DDI 230 may store at least part of the received image information, for example, in units of a frame in the memory 233. According to an embodiment, the memory 233 may include a register (not shown), and the register may store a setting value for performing a function of the electronic device 101. The image processing module 235 may perform pre-processing or post-processing (e.g., adjustment of a resolution, a brightness, or a size) based on characteristics of the image data or characteristics of the display 210. The mapping module 237 may generate a voltage value or current value corresponding to the pre-processed or post-processed image data through the image processing module 235. According to an embodiment, the voltage value or the current value may be generated, for example, based on at least some of the properties of pixels (e.g., the arrangement (RGB stripe or PenTile structure) of the pixels) or the size of each sub-pixel) in the display 210. As at least some of the pixels of the display are driven based on at least part of the voltage value or the current value, visual information (e.g., text, an image, or an icon) corresponding to the image data may be displayed through the display 210.

According to an embodiment, the display device 160 may further include the touch circuit 250. The touch circuit 250 may include a touch sensor 251 and a touch sensor IC 253 for controlling the touch sensor 251. The touch sensor IC (or touch sensor circuit) 253 may control the touch sensor 251 to sense, for example, a touch input or hovering input to a specific position of the display 210. For example, the touch sensor IC 253 may detect the touch input or hovering input by measuring a change in a signal (e.g., a voltage, light amount, resistance, or electric charge amount) for the specific position of the display 210. The touch sensor IC 253 may provide information (e.g., a position, area, pressure, or time) about the detected touch input or hovering input to the processor 120. According to an embodiment, at least part of the touch circuit 250 (e.g., the touch sensor IC 253) may be included as part of the DDI 230, the display 210, or another component (e.g., the auxiliary processor 123) disposed outside the display device 160.

According to an embodiment, the display device 160 may further include at least one sensor (e.g., a fingerprint sensor, an iris sensor, a pressure sensor, or an illuminance sensor) of the sensor module 176 or a control circuit therefor. In this case, the at least one sensor or the control circuit therefor may be embedded in part (e.g., the display 210 or the DDI 230) of the display device 160 or part of the touch circuit 250. For example, when the sensor module 176 embedded in the display device 160 includes a biometric sensor (e.g., a fingerprint sensor), the biometric sensor may obtain biometric information (e.g., a fingerprint image) related to a touch input through a partial area of the display 210. In another example, when the sensor module 176 embedded in the display device 160 includes a pressure sensor, the pressure sensor may obtain pressure information related to a touch input through the entire area or a partial area of the display 210. According to an embodiment, the touch sensor 251 or the sensor module 176 may be disposed between pixels of a pixel layer of the display 210, or on or under the pixel layer. According to an embodiment, the sensor module 176 may further include a pen sensor (e.g., a pen sensor circuit, a pen sensor IC, or a digitizer controller).

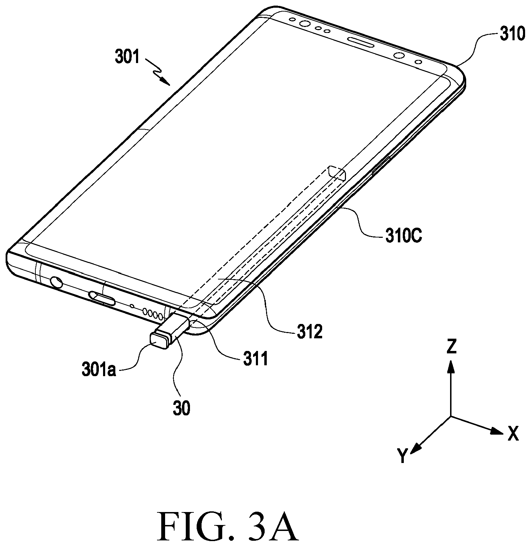

FIG. 3a is a perspective view illustrating an electronic device including a pen input device according to an embodiment.

Referring to FIG. 3a, an electronic device 301 (e.g., the electronic device 101 of FIG. 1) according to an embodiment may include a structure into which a pen input device 30 (e.g., the input device 150 of FIG. 1) may be inserted. The electronic device 301 according to various embodiments of the disclosure may include a housing 310, and a hole 311 may be included in part of the housing, for example, part of a side surface 310C thereof. The electronic device 301 according to an embodiment may include a receiving space 312 connected to the hole 311, and the pen input device 30 may be inserted into the receiving space 312. According to the illustrated embodiment, the pen input device 30 may include a pushable button 301a at one end thereof so as to easily take out the pen input device 30 from the receiving space 312 of the electronic device 301. When the button 301a is pressed, a repulsion mechanism (e.g., at least one spring) configured in association with the button 301a may be operated to release the pen input device 30 from the receiving space 312.

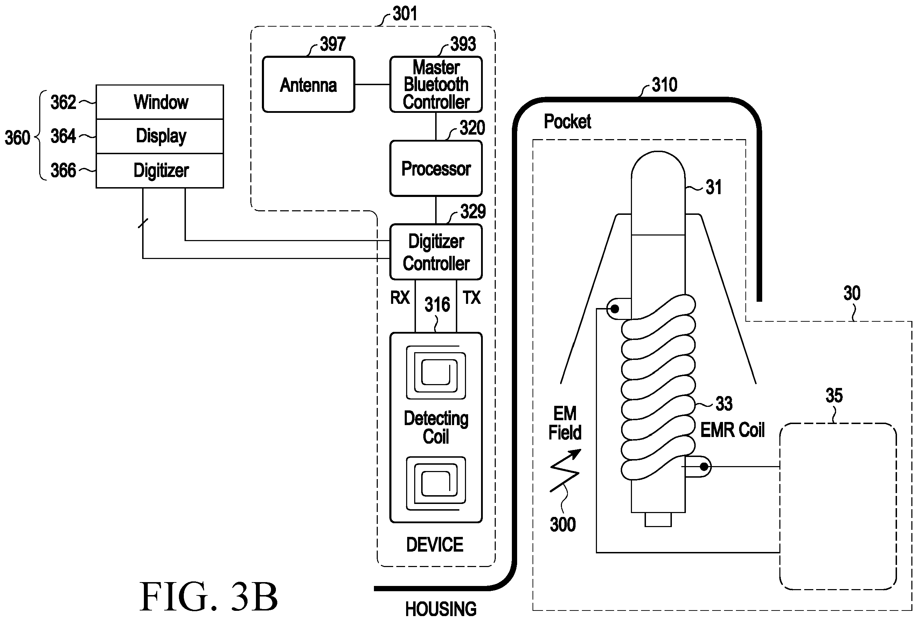

FIG. 3b is a diagram illustrating a relationship between an electronic device and a pen input device according to an embodiment.

According to an embodiment, the housing 310 of the electronic device 301 may include at least one hole (or opening) (e.g., the hole 311 of FIG. 3a), and the pen input device 30 may be inserted into an inner space connected to the hole 311 (e.g., a pocket). The electronic device 301 may include, for example, a processor 320 (e.g., the processor 120 of FIG. 1), a digitizer controller 329, a detecting coil 316, an antenna 397, and a master Bluetooth controller 393.

The pen input device 30 may include, for example, a pen tip 31, a coil 33 (e.g., an electro-magnetic resonance (EMR) coil), and a circuit board 35. According to an embodiment, the pen input device 30 may use at least one of an EMR method, an active electrostatic (AES) method, or an electrically coupled resonance (ECR) method.

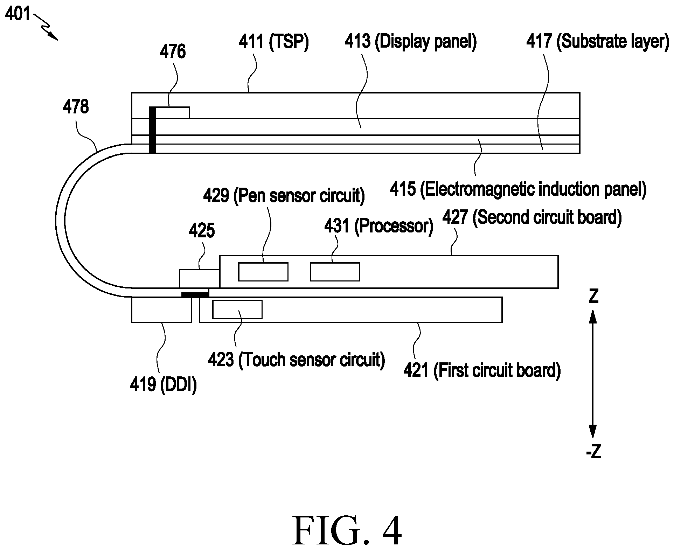

A display device 360 (e.g., the display device 160 of FIG. 1) may include, for example, a window 362, a display 364, and a digitizer 366 (e.g., an electromagnetic induction panel). According to an embodiment, the display device 360 may be included in the electronic device 301 and exposed to the outside through at least part of the housing 310. According to another embodiment, the display device 360 may be an independent device provided separately from the electronic device 301. According to an embodiment, the display device 360 may include a display driving circuit (e.g., a display driving circuit 419 of FIG. 4), and the display driving circuit 419 may be a DDI package. For example, the DDI package may include a DDI (or DDI chip), a timing controller (T-CON), a graphic random access memory (GRAM), or a power driver (power generating circuits). The timing controller may convert a data signal input from the processor 320 into a signal required by the DDI. The timing controller may serve to adjust the input data information to a signal suitable for a gate driver and a source driver of the DDI. The GRAM may serve as memory that temporarily stores data to be input to the DDI. The GRAM may store the input signal and transmit it back to the DDI. Herein, the GRAM may interact with the timing controller to process the signal. The power driver may generate a voltage for driving the flexible display 130 to supply voltages required for the gate driver and the source driver of the DDI.

According to various embodiments, the processor 320 and/or the display driving circuit 419 may control various interfaces. For example, the interfaces may include a mobile industry processor interface (MIPI), a mobile display digital interface (MDDI), a serial peripheral interface (SPI), an inter-integrated circuit (I2C), or a compact display port (CDP).

According to various embodiments, the processor 320 may control components included in the electronic device 301 or monitor states of the components. For example, the processor 320 may control the digitizer 366 through the digitizer controller 329 or obtain a signal received from the digitizer 366. In addition, the processor 320 may use the detection coil 316 to transmit an electrical or magnetic signal (e.g., an electromagnetic (EM) field 300) to an external electronic device (e.g., the pen input device 30) or receive an electrical or magnetic signal from the external electronic device (e.g., the pen input device 30). The processor 320 may determine location information or state information about the pen input device 30 based on a signal received from the pen input device 30 through the digitizer 366 or the detecting coil 316. According to an embodiment, one or more detecting coils 316 may be disposed in at least part of the inner space of the electronic device 301 provided so that the pen input device 30 may be inserted.

According to various embodiments, the processor 320 may determine whether the pen input device 30 has been inserted into the inner space provided in the electronic device 301 using data exchanged between the detecting coil 316 and the coil 33 or identify the state of a battery (not shown) provided in the pen input device 30, and then control at least one component to charge the battery. For example, the processor 320 may determine the position of the pen input device 30 based on data transmitted/received between the detecting coil 316 of the electronic device 301 and the coil 33 of the pen input device 30. When determining that the position of the pen input device 30 is within a chargeable range, the processor 320 may transmit a power signal (e.g., an electromagnetic field signal 300) to the pen input device 30 through the detecting coil 316.

According to various embodiments, the processor 320 may provide overall control to the operations of the electronic device 301, and control input/output of data packets having display data (e.g., data displayed through the display) according to a clock signal CLK. The data packets may include display data, a horizontal synchronization signal Hsync, a vertical synchronization signal Vsync, and/or a data enable signal DE. According to an embodiment, the display driving circuit 419 may receive data packets from the processor 320 through an interface, and output the horizontal synchronization signal, the vertical synchronization signal, and the data enable signal, the display data, and/or the clock signal.

According to various embodiments, the display device 360 may be replaced with a touch screen panel that does not include the digitizer 366. In this case, the processor 320 may identify the position and input of the pen input device 30 using a sensor included in the touch screen panel. According to various embodiments, the digitizer 366 may be omitted depending on implementation of the pen input device 30. For example, in an embodiment in which the pen input device 30 generates a signal using power of the battery included in the pen input device 30, the digitizer 366 may be omitted.

FIG. 4 is a diagram illustrating a display driving circuit, a touch sensor circuit, a pen sensor circuit, and a processor in an electronic device according to an embodiment.

Referring to FIG. 4, an electronic device 401 (e.g., the electronic device 101 of FIG. 1 or the electronic device 301 of FIGS. 3a and 3b) may include a touch screen panel (TSP) 411, a display panel 413, an electromagnetic induction panel 415, a substrate layer 417, a display driving circuit (DDI) 419, a first circuit board (or a flexible printed circuit board (FPCB) (e.g., a module flexible printed circuit board (M-FPCB)) 421, a touch sensor circuit (or touch sensor IC) 423, a connector 425, a second circuit board (or printed circuit board) 427 (e.g., a PCB, an FPCB, or a rigid-flexible PCB (RFPCB)), a pen sensor circuit (or pen sensor IC) 429 (e.g., the digitizer controller 329 of FIG. 3), and a processor 431. For example, the second circuit board 427 may be a main board, and the first circuit board 421 may be a sub-board connected to the second circuit board 427 through the connector 425 or other connection means.

In the TSP 411 according to an embodiment, at least one electrode 476 may be disposed, and a switch (not shown) formed between electrodes may be connected to the at least one electrode 476 and the substrate layer 417. The electrodes 476 may be connected by a connection line (not shown), and when the switch is controlled to an on state by the DDI 419, the electrodes may be connected to each other. The electrodes may have capacitance values by which a touch position or pressure is identified. According to an embodiment, the TSP 411 may include a transparent conductive layer (or film) based on various conductive materials such as indium tin oxide (ITO), and use the transparent conductive layer to serve as electrodes.

According to an embodiment, the at least one electrode 476 may be connected to the substrate layer 417, and may be connected to the touch sensor circuit 423 through the FPCB 478, and controlled by the touch sensor circuit 423.

According to an embodiment, the touch sensor circuit 423 may be electrically connected to the DDI 419 through the FPCB 478 and the first circuit board (e.g., M-FPCB) 421, and receive a synchronization signal (e.g., a first synchronization signal or a second synchronization signal) from the DDI 419.

The display panel 413 according to an embodiment may include a plurality of pixels. Each of the plurality of pixels may include a red sub-pixel, a green sub-pixel, and a blue sub-pixel. Alternatively, each of the plurality of pixels may include a red sub-pixel, a green sub-pixel, or a blue sub-pixel, and a green sub-pixel. Alternatively, each of the plurality of pixels may include a red sub-pixel, a green sub-pixel, a blue sub-pixel, and a white sub-pixel. The display panel 413 according to an embodiment may include a display substrate layer, a thin film transistor (TFT) array, an organic light emitting layer, and a thin film encapsulation (TFE) layer. The display substrate layer may be a base layer serving as the base of the display panel. The display substrate layer may be formed of, but not limited to, a flexible polymer material. According to an embodiment, the display panel 413 may include an unbreakable (UB) type OLED display (e.g., a curved display) including organic light emitting diodes (OLEDs). According to an embodiment, the electronic device 401 may include a display device (e.g., the display device 360 of FIG. 3) in which the TSP 411 is formed as at least part of the display panel 413. For example, the display device 360 may include an on cell touch AMOELD (active matrix organic light-emitting diode) (OCTA) type display. Further, the display device 360 is not limited thereto, and may be formed in various manners (e.g., an add-on type or an in-cell type).

The electromagnetic induction panel 415 according to an embodiment may output a signal (e.g., an electromagnetic field) for identifying the position of a pen input device (e.g., the pen input device 30 of FIGS. 3a and 3b).

The substrate layer 417 according to an embodiment may be disposed in a -z direction (e.g., a downward direction) of the display panel 413. The substrate layer 417 may include wirings for supplying power and/or a signal to the display panel 413. According to various embodiments, the substrate layer 417 may be made of a bendable material and extend from one end of the display panel 413 to the first circuit board (e.g., M-FPCB) 421. The substrate layer 417 according to an embodiment may be formed of a flexible material and include at least one polymer layer.

The DDI 419 according to an embodiment may be disposed in a partial area of the substrate layer 417. The DDI 419 may control the pixels of the display panel 413 through the substrate layer 417. The DDI 419 according to an embodiment may output a display driving signal.

The DDI 419 according to an embodiment may support a plurality of driving frequencies (e.g., driving frequencies including 1Hz, 10Hz, 24Hz, 30Hz, 60Hz, 96Hz, 120Hz, or 240Hz), and output a driving frequency selected from among the plurality of driving frequencies according to an operation mode (e.g., a display mode).

The DDI 419 according to an embodiment may dynamically change the driving frequency during screen display through interworking with the processor 431, and perform screen display in at least one intermediate driving frequency (or bridge frequency) during at least part of a time period for switching a start driving frequency to a target driving frequency. For example, the DDI 419 may output by changing the driving frequency from 60Hz to 120Hz during screen display, and output a driving frequency of 96Hz while changing the driving frequency from 60Hz to 120Hz.

The DDI 419 according to an embodiment may output display driving signals of different frequencies based on different display modes. The DDI 419 according to an embodiment may output a display driving signal of a second frequency (e.g., a frequency different from a first frequency) based on the change of the display mode to a second mode during output of a display driving signal of the first frequency in a first mode. According to an embodiment, when the frequency of the display driving signal is changed, the frequency of a touch sensing driving signal and the frequency of a pen sensing driving signal should also be changed to be independent of each other according to the changed display driving signal frequency. When the display driving signal is simultaneously provided to a touch sensor, a pen sensor, and a processor, it may be difficult to change the touch sensing driving signal and the pen sensing driving signal.

In the second mode (e.g., high-speed mode) or based on switching from the first mode (e.g., low-speed mode) to the second mode, the DDI 419 according to an embodiment may provide the first synchronization signal corresponding to the second mode or changed to correspond to the second mode to the processor 431, and provide the second synchronization signal different from the first synchronization signal to the touch sensor circuit 423 and/or the pen sensor circuit 429. According to an embodiment, the first driving signal and the second driving signal may differ in terms of signal properties. For example, the signal properties may include at least one of a frequency, a phase, or a pulse width.

For example, the frequency of the first synchronization signal corresponding to the second mode may be an intermediate frequency of a frequency band supported by the DDI 419.

For example, the frequency of the first synchronization signal may be the first frequency, the frequency of the second synchronization signal may be the second frequency, and the second frequency may be a lower frequency (Hz) than the first frequency. For example, the first frequency may be an integer multiple of the second frequency. For example, the first frequency may be 120Hz, and the second frequency may be 60Hz.

For example, in the high-speed mode or based on switching from the low-speed mode to the high-speed mode, the DDI 419 may provide the first synchronization signal (e.g., a 120Hz signal) corresponding to the high-speed mode or changed to the high-speed mode to the processor 431, and provide the second synchronization signal (e.g., a 60Hz signal) different from the first synchronization signal (e.g., the 120Hz signal) to the touch sensor circuit 423. The touch sensor circuit 423 may provide the second synchronization signal as a pen sensor driving signal to the pen sensor circuit 429, while operating based on the second synchronization signal (e.g., the 60Hz signal).

In another example, in the high-speed mode or based on switching from the low-speed mode to the high-speed mode, the DDI 419 may provide the first synchronization signal (e.g., a first frequency signal) corresponding to the high-speed mode or changed to the high-speed mode to the processor 431, and provide the second synchronization signal (e.g., a second frequency signal) different from the first synchronization signal to the pen sensor circuit 429. The pen sensor circuit 429 may provide a touch sensor driving signal to the touch sensor circuit 423 based on the second synchronization signal. For example, the first frequency may be an integer multiple of the second frequency. For example, the first frequency may be 120Hz, and the second frequency may be 60Hz.

In another example, in the high-speed mode or based on switching from the low-speed mode (e.g., normal display mode or always on display (AOD)) to the high-speed mode, the DDI 419 may provide the first synchronization signal (e.g., the first frequency signal) corresponding to the high-speed mode or changed to the high-speed mode to the processor 431, and provide the second synchronization signal (e.g., the second frequency signal) different from the first synchronization signal to the touch sensor circuit 423 and the pen sensor circuit 429. For example, the first frequency may be an integer multiple of the second frequency. For example, the first frequency may be 120Hz, and the second frequency may be 60Hz.

The first circuit board (e.g., M-FPCB) 421 according to an embodiment may be electrically connected to a partial area of the substrate layer 417. For example, the first circuit board 421 may be electrically connected to a conductive pattern (or wiring) formed on the substrate layer 417. For example, the first circuit board 421 may be an M-FPCB. The first circuit board 421 according to an embodiment may be connected to the second circuit board 427 through the connector 425.

The touch sensor circuit 423 according to an embodiment may be disposed on at least part of the first circuit board 421, and perform a touch sensing operation during a first time period based on the first synchronization signal based on the display driving signal from the DDI 419, or the second synchronization signal different from the first synchronization signal. According to an embodiment, the touch sensor circuit 423 may provide the first synchronization signal or the second synchronization signal different from the first synchronization signal as a pen sensor driving signal to the pen sensor circuit 429 based on the first synchronization signal based on the display driving signal from the DDI 419.

The pen sensor circuit 429 according to an embodiment may be disposed on at least part of the second circuit board 427, and perform a pen sensing operation during a second time period based on the first synchronization signal based on the display driving signal from the DDI 419, or the second synchronization signal different from the first synchronization signal. According to an embodiment, the pen sensor circuit 429 may provide the first synchronization signal or the second synchronization signal different from the first synchronization signal as a touch sensor driving signal to the touch sensor circuit 423 based on the first synchronization signal based on the display driving signal from the DDI 419. According to an embodiment, the first driving signal and the second driving signal may differ in terms of signal properties. For example, the signal properties may include at least one of a frequency, a phase, or a pulse width.

According to an embodiment (not shown), the pen sensor circuit 429 is disposed in various manners, not limited to the arrangement position of illustrated example. For example, the pen sensor circuit 429 may be disposed in at least part of the first circuit board 421, or in an area adjacent to an area in which the DDI 419 is disposed.

The processor 431 according to an embodiment may be disposed on at least part of the second circuit board 427, and electrically connected to the DDI 419, the touch sensor circuit 423, and/or the pen sensor circuit 429. According to an embodiment, the processor 431 may control the display based on the display driving signal from the DDI 419, or identify an input according to a result of touch sensing and/or pen sensing of the touch sensor circuit 423 and/or the pen sensor circuit 429. For example, the processor 431 may be an AP.

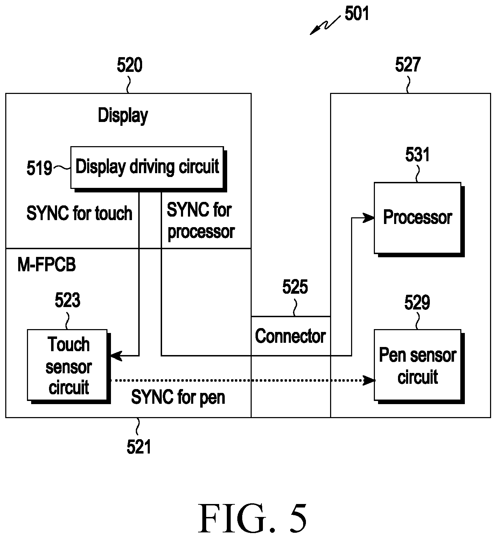

FIG. 5 is a diagram illustrating an example of signal processing among a display driving circuit, a touch sensor circuit, and a pen sensor circuit in an electronic device according to an embodiment. For example, FIG. 5 illustrates a case in which the display driving circuit provides a synchronization signal based on a display driving signal to a processor and the touch sensor circuit, and the touch sensor circuit provides the synchronization signal to the pen sensor circuit.

Referring to FIG. 5, an electronic device 501 (e.g., the electronic device 101 of FIG. 1, the electronic device 301 of FIG. 3, or the electronic device 401 of FIG. 4) may include a display module 520 including a display driving circuit (DDI) 519, a first circuit board (or FPCB) (e.g., M-FPCB) 521 on which a touch sensor circuit (touch sensor IC) 523 is disposed, and a second circuit board (or printed circuit board) (e.g., PCB) 527 which is electrically connected to the first circuit board 521 through a connector 525 and on which a pen sensor circuit (pen sensor IC) 529 and a processor (AP) 531 are disposed.

The display driving circuit 519 according to an embodiment may provide a first synchronization signal based on a first display driving signal as a synchronization signal for touch sensing, SYNC for touch to the touch sensor circuit 523, and provide the first synchronization signal as a synchronization signal SYNC for AP to the processor 531. For example, the first display driving signal and the first synchronization signal may be the same or different.

The touch sensor circuit 523 according to an embodiment may perform a touch sensing operation based on the first synchronization signal, and provide a second synchronization signal (e.g., a synchronization signal for pen sensing, SYNC for pen) of a different frequency from the first synchronization signal to the pen sensor circuit 529. According to an embodiment, the first driving signal and the second driving signal may differ in terms of signal properties. For example, the signal properties may include at least one of a frequency, a phase, or a pulse width. For example, the first synchronization signal and the second synchronization signal may be signals that prevent the touch sensing operation and the pen sensing operation from overlapping each other. The processor 531 may perform a processing operation based on the first synchronization signal. The pen sensor circuit 529 may perform the pen sensing operation using the second synchronization signal different from the first synchronization signal, that is, using the synchronization signal for pen sensing, SYNC for pen.

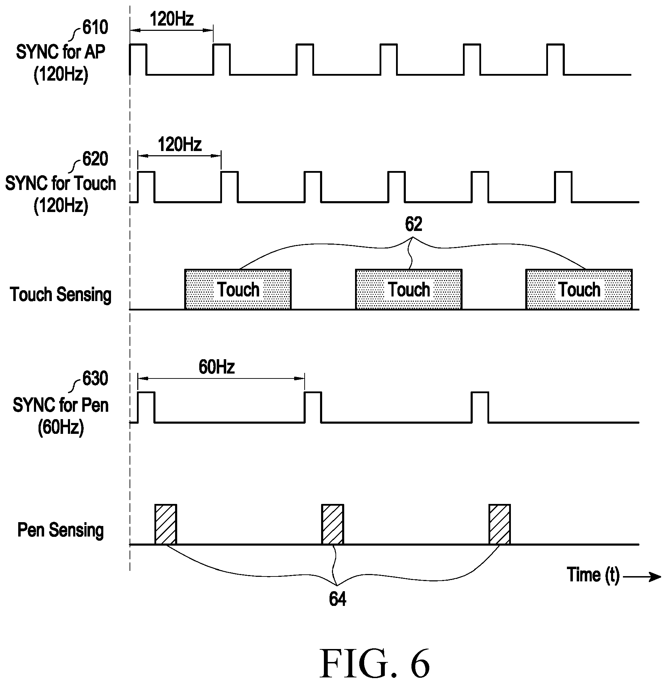

FIG. 6 is a diagram illustrating an example of synchronization signals for a display driving circuit, a touch sensor circuit, and a pen sensor circuit in an electronic device according to an embodiment. For example, FIG. 6 is a diagram illustrating synchronization signals, when the display driving circuit provides a synchronization signal based on a display driving signal to a processor and the touch sensor circuit, and the touch sensor circuit provides a synchronization signal to the pen sensor circuit.

Referring to FIG. 6, the display driving circuit 519 may provide a first synchronization signal (e.g., a 120Hz signal) 620 based on a first display driving signal, as a synchronization signal for touch sensing, SYNC for touch 620 to the touch sensor circuit 523. Simultaneously or sequentially, the display driving circuit 519 may provide the first synchronization signal as a synchronization signal for processing, SYNC for AP 610 to the processor 531, and the touch sensor circuit 523 may provide a second synchronization signal 630 different from the first synchronization signal, as a synchronization signal for pen sensing, SYNC for pen to the pen sensor circuit 529. According to an embodiment, the first driving signal and the second driving signal may differ in terms of frequencies among signal properties (e.g., a frequency, a phase, or a pulse width).

For example, the touch sensor circuit 523 may change a touch sensing frequency autonomously or based on a request of the processor 531 based on the reception of the first synchronization signal (the synchronization signal for touch sensing, SYNC for touch 620), and generate the second synchronization signal (e.g., the synchronization signal for pen sensing, SYNC for pen 630) to be transmitted to the pen sensor circuit 529 in order to prevent interference between touch sensing and pen sensing according to the changed touch sensing frequency.

For example, when the display driving circuit 519 simultaneously or sequentially provides the first synchronization signal of 120Hz based on the first display driving signal as the synchronization signal for touch sensing, SYNC for touch 620 to the touch sensor circuit 523 and as the synchronization signal for processing, SYNC for AP 610 to the processor 531, and the touch sensor circuit 532 provides the second synchronization signal of 60Hz different from the first synchronization signal as the synchronization signal for pen sensing, SYNC for pen to the pen sensor circuit 529, the resulting prevention of overlap between touch sensing periods 62 and pen sensing periods 64 may lead to no interference between touch sensing and pen sensing.

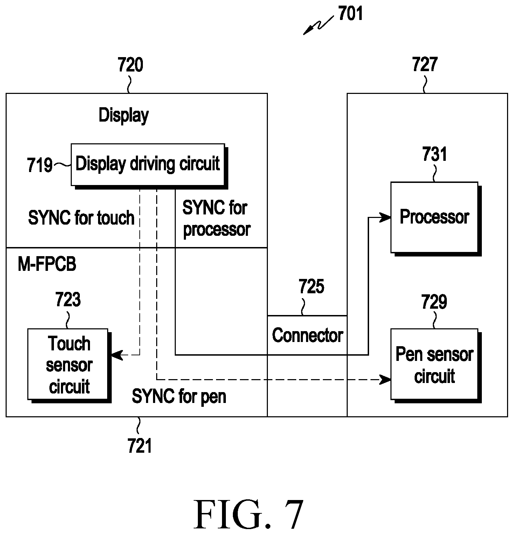

FIG. 7 is a diagram illustrating another example of signal processing among a display driving circuit, a touch sensor circuit, and a pen sensor circuit in an electronic device according to an embodiment. For example, FIG. 7 illustrates a case in which the display driving circuit provides a display driving signal-based synchronization signal to a processor, and provides a synchronization signal for touch sensing and a synchronization signal for pen sensing to the touch sensor circuit and the pen sensor circuit, respectively.

Referring to FIG. 7, an electronic device 701 (e.g., the electronic device 101 of FIG. 1, the electronic device 301 of FIG. 3, or the electronic device 401 of FIG. 4) may include a display module 720 including a display driver integrated circuit (DDI) 719, a first circuit board (or an FPCB) (e.g., an M-FPCB) 721 on which a touch sensor circuit (or touch sensor IC) 723 is disposed, and a second circuit board (or printed circuit board) (e.g., PCB) 727 which is electrically connected to the first circuit board 721 through a connector 725 and on which a pen sensor circuit (or pen sensor IC) 729 and a processor (AP) 731 are disposed.

The display driving circuit 719 according to an embodiment may perform a display operation based on a first display driving signal. The display driving circuit 719 may provide a first synchronization signal based on the first display driving signal as a synchronization signal for processing, SYNC for AP to the processor 731. For example, the first display signal and the first synchronization signal may be the same or different. The display driving circuit 719 may provide a second synchronization signal having a signal property different from that of the first synchronization signal based on the first display driving signal, as a synchronization signal for touch sensing, SYNC for touch to the touch sensor circuit 723. The display driving circuit 719 may provide a second synchronization signal different from the first synchronization signal based on the first display driving signal, as a synchronization signal for pen sensing, SYNC for pen to the pen sensor circuit 729. For example, the first synchronization signal may differ from the second synchronization signal in terms of signal properties. For example, the signal properties may include at least one of a frequency, a phase, or a pulse width.

The display driving circuit 719 according to an embodiment may change the first synchronization signal and/or the second synchronization signal based on a change from a previous display driving signal to the first display driving signal, so that the synchronization signal SYNC for touch provided to the touch sensor circuit 723 and the synchronization signal SYNC for pen provided to the pen sensor circuit 729 may be changed.

According to an embodiment, the display driving circuit 719 may change a register value inside an sync output port according to a change in a display driving frequency, and generate the second synchronization signal to be provided to the sensor circuit 729 and the touch sensor circuit 723 based on the changed register value.

According to an embodiment, the display driving circuit 719 may generate a plurality of synchronization signals having different properties, select at least one synchronization signal (e.g., the first synchronization signal and/or the second synchronization signal) from among the plurality of synchronization signals according to a touch sensing or pen sensing situation, such that no interference occurs between the touch sensor circuit 723 and the pen sensor circuit 729, and provide the selected synchronization signal to the touch sensor circuit 723 and/or the pen sensor circuit 729. The processor 731 according to an embodiment may perform a control operation associated with the display module 720 based on the first synchronization signal based on the first display driving signal. The touch sensor circuit 723 according to an embodiment may perform a touch sensing operation based on the synchronization signal for touch sensing, SYNC for touch, and the pen sensor circuit 729 may perform a pen sensing operation based on the synchronization signal for pen sensing, SYNC for pen. The two synchronization signals may be signals that prevent the touch sensing operation and the pen sensing operation from overlapping each other.

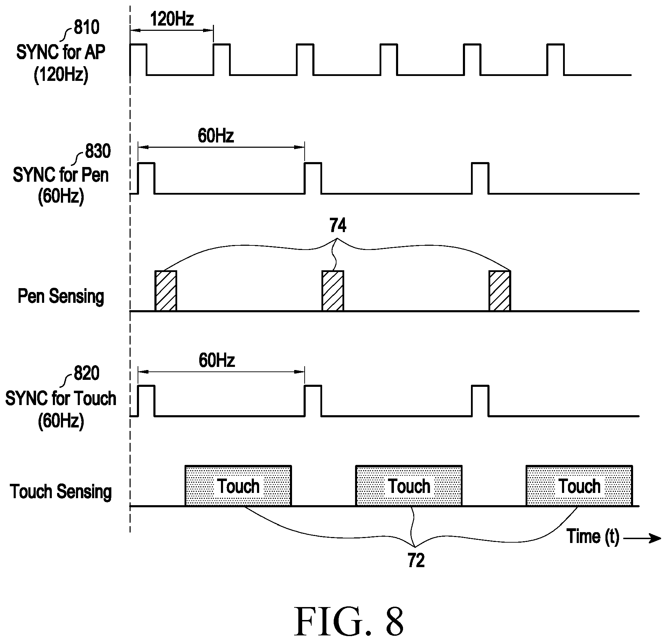

FIG. 8 is a diagram illustrating another example of synchronization signals for a display driving circuit, a touch sensor circuit, and a pen sensor circuit in an electronic device according to an embodiment. For example, FIG. 8 illustrates synchronization signals, when the display driving circuit provides a display driving signal-based synchronization signal to a processor and provides a synchronization signal for touch sensing and a synchronization signal for pen sensing to the touch sensor circuit and the pen sensor circuit, respectively.

Referring to FIG. 8, when the display driving circuit 719 provides a first synchronization signal (e.g., a 120Hz signal) based on a first display driving signal, as a synchronization signal for processing, SYNC for AP 810 to the processor 731, and provides a second synchronization signal (e.g., a 60Hz signal) different from the first synchronization signal, as a synchronization signal for touch sensing SYNC for touch 820 and a synchronization signal for pen sensing, SYNC for pen 830 to the touch sensor circuit 723 and the pen sensor circuit 729, respectively, the resulting prevention of overlap between touch sensing periods 72 and pen sensing periods 74 may lead to no interference between touch sensing and pen sensing.

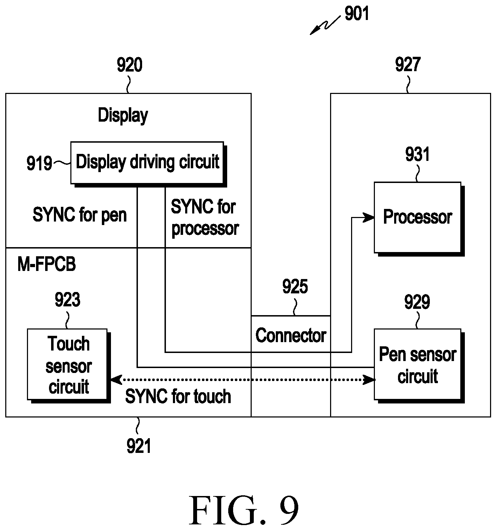

FIG. 9 is a diagram illustrating another example of signal processing among a display driving circuit, a touch sensor circuit, and a pen sensor circuit in an electronic device according to an embodiment. For example, FIG. 9 illustrates a case in which the display driving circuit provides a display driving signal-based synchronization signal to a processor and the pen sensor circuit, and the pen sensor circuit provides a synchronization signal to the touch sensor circuit.

Referring to FIG. 9, an electronic device 901 (e.g., the electronic device 101 of FIG. 1, the electronic device 301 of FIG. 3, or the electronic device 401 of FIG. 4) may include a display module 920 including a display driver integrated circuit (DDI) 919, a first circuit board (or an FPCB) (e.g., an M-FPCB) 921 on which a touch sensor circuit (or touch sensor IC) 923 is disposed, and a second circuit board (or printed circuit board) 927 which is electrically connected to the first circuit board 921 through a connector 925 and on which a pen sensor circuit (or pen sensor IC) 929 and a processor (AP) 931 are disposed.

The display driving circuit 919 according to an embodiment may simultaneously or sequentially provide a first synchronization signal based on a first display driving signal, as a synchronization signal for processing, SYNC for AP to the processor 931 and as a synchronization signal for pen sensing, SYNC for pen to the pen sensor circuit 923.

According to an embodiment, the processor 931 may perform a processing operation based on the first display driving signal.

According to an embodiment, the pen sensor circuit 929 may perform a pen sensing operation based on the first synchronization signal, and provide a second synchronization signal different from the first synchronization signal, as a synchronization signal for touch sensing, SYNC for touch to the touch sensor circuit 923.

For example, the first synchronization signal may differ from the second synchronization signal in terms of signal properties. For example, the signal properties may include at least one of a frequency, a phase, or a pulse width.

For example, the first synchronization signal and the second synchronization signal may be signals that prevent the touch sensing operation and the pen sensing operation from overlapping each other.

For example, the pen sensor circuit 929 may change a pen sensing frequency autonomously or based on a request of the processor 931, and generate the second synchronization signal (e.g., the synchronization signal for touch sensing, SYNC for pen) to be transmitted to the touch sensor circuit 923 in order to prevent interference between touch sensing and pen sensing according to the changed pen sensing frequency.

According to an embodiment, when the pen sensor circuit 929 and the touch sensor circuit 923 are disposed in one module or the same board (e.g., the PCB 927 or the FPCB 921), the touch sensor circuit 923 may effectively obtain the second synchronization signal (e.g., the synchronization signal for touch sensing, SYNC for touch) transmitted from the pen sensor circuit 929.

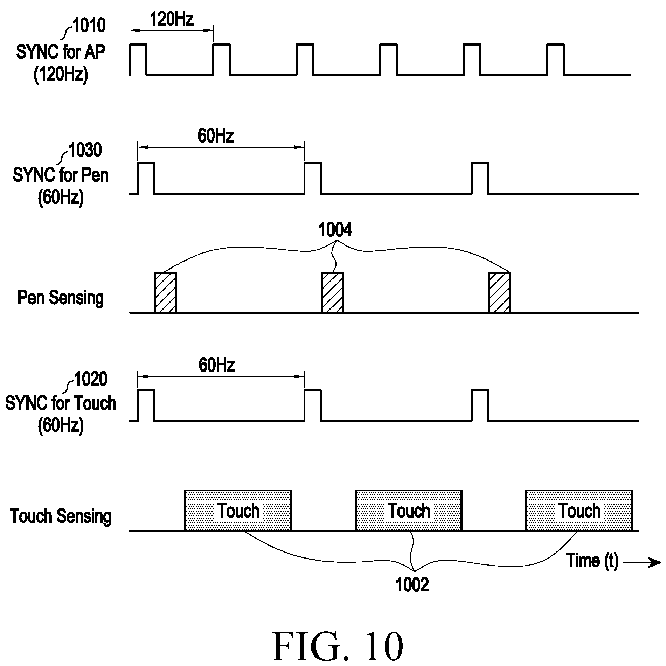

FIG. 10 is a diagram illustrating another example of synchronization signals for a display driving circuit, a touch sensor circuit, and a pen sensor circuit in an electronic device according to an embodiment. For example, FIG. 10 illustrates synchronization signals, when the display driving circuit provides a display driving signal-based first synchronization signal to a processor and the pen sensor circuit, and the pen sensor circuit provides a second synchronization signal to the touch sensor circuit.

Referring to FIG. 10, when the display driving circuit 919 simultaneously or sequentially provides a first display driving signal (a 120Hz signal) as a synchronization signal for processing, SYNC for AP 1010 to the processor 1031 and as a synchronization signal for pen sensing, SYNC for pen 1030 to the pen sensor circuit 929, and the pen sensor circuit 929 provides a signal (a 60Hz signal) different from the first display driving signal, for example, a synchronization signal for touch sensing, SYNC for touch 1020 to the touch sensor circuit 923, the resulting prevention of overlap between touch sensing periods 1002 and pen sensing periods 1004 may lead to no interference between touch sensing and pen sensing.

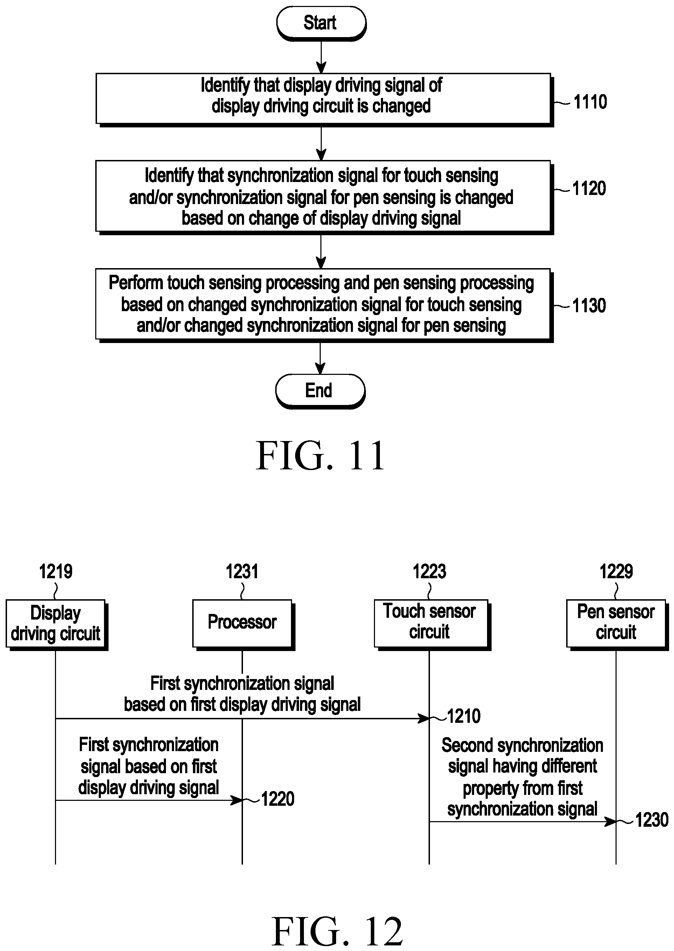

FIG. 11 is a diagram illustrating an operation of a processor based on a display driving signal according to an embodiment.

Referring to FIG. 11, a processor (e.g., the processor 120 of FIG. 1, the processor 431 of FIG. 4, the processor 531 of FIG. 5, the processor 731 of FIG. 7, or the processor 931 of FIG. 9) of an electronic device according to an embodiment (e.g., the electronic device 101 of FIG. 1, the electronic device 301 of FIG. 3, the electronic device 401 of FIG. 4, the electronic device 501 of FIG. 5, the electronic device 701 of FIG. 7, or the electronic device 901 of FIG. 9) may perform at least one of operations 1101 to 1103.

In operation 1101, the processor 120 may identify that a display driving signal from the display driving circuit has been changed to a first display driving signal. For example, as a low-speed display mode is switched to a high-speed display mode, the display driving circuit 919 may change the display driving signal to the first display driving signal, and provide the first display driving signal to which the display driving signal is changed as a synchronization signal for processing, SYNC for AP to the processor 120.

In operation 1102, the processor 120 may identify a change in a synchronization signal for touch sensing and/or a synchronization signal for pen sensing based on the change of the display driving signal.

In operation 1103, the processor 120 may perform touch sensing processing and pen sensing processing based on the changed synchronization signal for touch sensing and/or the changed synchronization signal for pen sensing.

According to various embodiments, a method of providing a display-based synchronization signal in an electronic device (e.g., the electronic device 101 of FIG. 1, the electronic device 301 of FIG. 3, the electronic device 401 of FIG. 4, the electronic device 501 of FIG. 5, the electronic device 701 of FIG. 7, or the electronic device 901 of FIG. 9) may include, based on a change in a display driving signal, providing a first synchronization signal corresponding to the changed display driving signal to a processor (e.g., the processor 120 of FIG. 1, the processor 431 of FIG. 4, the processor 531 of FIG. 5, the processor 731 of FIG. 7, or the processor 931 of FIG. 9) of the electronic device by a display (e.g., the display 160 of FIGS. 1 and 2, the display 520 of FIG. 5, the display 720 of FIG. 7, or the display 920 of FIG. 9) of the electronic device, and based on the provision of the first synchronization signal from the display, receiving a second synchronization signal different from the first synchronization signal by at least one of a first sensor circuit (e.g., the touch sensor IC 253 of FIG. 2, the touch sensor circuit 423 of FIG. 4, the touch sensor circuit 523 of FIG. 5, the touch sensor circuit 723 of FIG. 7, or the touch sensor circuit 923 of FIG. 9) of the electronic device or a second sensor circuit (e.g., the pen sensor circuit 429 of FIG. 4, the pen sensor circuit 529 of FIG. 5, the pen sensor circuit 729 of FIG. 7, or the pen sensor circuit 929 of FIG. 9) of the electronic device.

FIG. 12 is a flowchart illustrating an example of operations of a display driving circuit, a touch sensor circuit, a pen sensor circuit, and a processor in an electronic device according to an embodiment.

Referring to FIG. 12, in operation 1210, a display driving circuit 1219 (e.g., the display driver IC 230 of FIG. 2, the DDI 430 of FIG. 4, and the display driving circuit 519 of FIG. 5) according to an embodiment may provide a first synchronization signal based on a first display driving signal as a synchronization signal for touch sensing, SYNC for touch to a touch sensor circuit 1223 (e.g., the touch sensor IC 253 of FIG. 2, the touch sensor circuit 423 of FIG. 4, the touch sensor circuit 523 of FIG. 5, the touch sensor circuit 723 of FIG. 7, and the touch sensor circuit 923 of FIG. 9).

In operation 1220, the display driving circuit 1219 may provide the first synchronization signal as a synchronization signal for processing, SYNC for AP to the processor 1231 (e.g., the processor 120 of FIG. 1, the processor 431 of FIG. 4, the processor 531 of FIG. 5, the processor 731 of FIG. 7, and the processor 931 of FIG. 9), simultaneously with or sequentially to providing of the first synchronization signal as the synchronization signal for touch sensing, SYNC for touch to the touch sensor circuit 1223. For example, the first display driving signal and the first synchronization signal may be the same or different.

In operation 1230, the touch sensor circuit 1223 may perform a touch sensing operation based on the first synchronization signal, and provide a second synchronization signal (e.g., the synchronization signal for pen sensing, SYNC for pen) having a different property from the first synchronization signal to a pen sensor circuit 1229 (e.g., the pen sensor circuit 429 of FIG. 4, the pen sensor circuit 529 of FIG. 5, the pen sensor circuit 729 of FIG. 7, and the pen sensor circuit 929 of FIG. 9). According to an embodiment, the first driving signal and the second driving signal may differ in terms of signal properties. For example, the signal properties may include at least one of a frequency, a phase, or a pulse width. For example, the first synchronization signal and the second synchronization signal may be signals that prevent the touch sensing operation and a pen sensing operation from overlapping each other. The processor 1231 may perform a processing operation based on the first synchronization signal. The pen sensor circuit 1229 may perform the pen sensing operation using the second synchronization signal different from the first synchronization signal, that is, the synchronization signal for pen sensing, SYNC for pen.

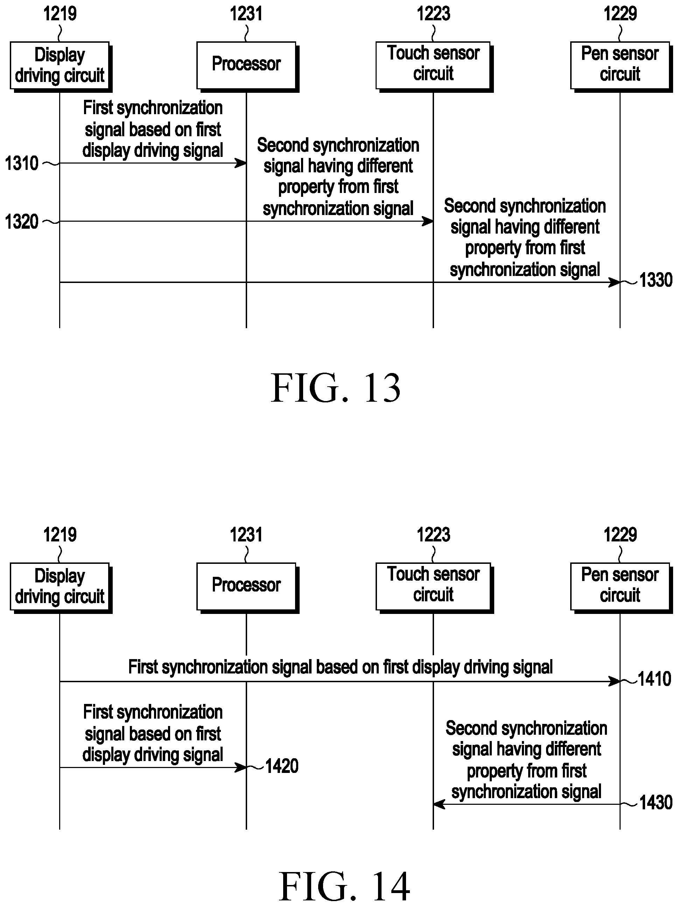

FIG. 13 is a flowchart illustrating another example of operations of a display driving circuit, a touch sensor circuit, a pen sensor circuit, and a processor in an electronic device according to an embodiment.

Referring to FIG. 13, in operation 1310, the display driving circuit 1219 according to an embodiment may provide a first synchronization signal based on a first display driving signal as a synchronization signal for processing, SYNC for AP to the processor 1231. For example, the first display signal and the first synchronization signal may be the same or different.

In operation 1320, the display driving circuit 1219 according to an embodiment may provide a second synchronization signal having a different signal property from the first synchronization signal based on the first display driving signal, as a synchronization signal for touch sensing, SYNC for touch to the touch sensor circuit 1223.

In operation 1330, the display driving circuit 1219 according to an embodiment may provide the second synchronization signal different from the first synchronization signal as a synchronization signal for pen sensing, SYNC for pen to the pen sensor circuit 1229. According to an embodiment, the first synchronization signal and the second synchronization signal may differ in terms of signal properties. For example, the signal properties may include at least one of a frequency, a phase, or a pulse width. According to an embodiment, the synchronization signal may be provided simultaneously or sequentially to the touch sensor circuit 1223 and the pen sensor circuit 1229. According to an embodiment, the first driving signal and the second driving signal may differ in terms of signal properties. For example, the signal properties may include at least one of a frequency, a phase, or a pulse width. For example, the first synchronization signal and the second synchronization signal may be signals that prevent a touch sensing operation and a pen sensing operation from overlapping each other. The processor 1231 may perform a processing operation based on the first synchronization signal. The touch sensor circuit 1223 and the pen sensor circuit 1229 may perform the pen sensing operation using the second synchronization signal different from the first synchronization signal.

FIG. 14 is a flowchart illustrating another example of operations of a display driving circuit, a touch sensor circuit, a pen sensor circuit, and a processor in an electronic device according to an embodiment.

Referring to FIG. 14, in operation 1410, the display driving circuit 1219 according to an embodiment may provide a first synchronization signal based on a first display driving signal as a synchronization signal for pen sensing, SYNC for pen to the pen sensor circuit 1229.

In operation 1420, the display driving circuit 1219 may provide the first synchronization signal as a synchronization signal for processing, SYNC for AP to the processor 1231, simultaneously with or sequentially to providing of the first synchronization signal as the synchronization signal for pen sensing, SYNC for pen to the pen sensor circuit 1229. For example, the first display driving signal and the first synchronization signal may be the same or different.

In operation 1430, the pen sensor circuit 1229 may perform a pen sensing operation based on the first synchronization signal, and provide a second synchronization signal (e.g., the synchronization signal for touch sensing, SYNC for touch) having a different property from the first synchronization signal to the touch sensor circuit 1223. According to an embodiment, the first driving signal and the second driving signal may differ in terms of signal properties. For example, the signal properties may include at least one of a frequency, a phase, or a pulse width. For example, the first synchronization signal and the second synchronization signal may be signals that prevent the touch sensing operation and a pen sensing operation from overlapping each other. The processor 1231 may perform a processing operation based on the first synchronization signal. The touch sensor circuit 1223 may perform the touch sensing operation using the second synchronization signal different from the first synchronization signal, that is, the synchronization signal for touch sensing, SYNC for touch.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1^{st}" and "2^{nd}", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term 'non-transitory' simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to various embodiments, in a storage medium storing instructions, the instructions may be configured to, when executed by at least one processor, cause the at least one processor to perform at least one operation. The at least one operation may include identifying that a display driving signal of a display driving circuit is changed to a first display driving signal, identifying that a synchronization signal for touch sensing and/or a synchronization signal for pen sensing is changed based on the change of the display driving signal, and performing touch sensing processing and pen sensing processing based on the changed synchronization signal for touch sensing and/or the changed synchronization signal for pen sensing.

Embodiments of the disclosure invented in the specification and the drawings are merely provided for specific examples to easily explain the technical idea according to the embodiments of the disclosure and help the understanding of the embodiments of the disclosure, not intended to limit the scope of the embodiments of the disclosure. Therefore, all modifications or variations derived from the technical ideas of various embodiments of the disclosure as well as the embodiments disclosed herein should be interpreted as encompassed in the scope of various embodiments of the disclosure.

## Claims

1. An electronic device comprising:
a display;
a first sensor circuit;
a second sensor circuit; and
a processor electrically connected to the display, the first sensor circuit, and the second sensor circuit,
wherein based on a change in a display driving signal of the display, the display is configured to provide a first synchronization signal corresponding to the changed display driving signal to the processor, and
wherein based on the providing of the first synchronization signal, a second synchronization signal different from the first synchronization signal is provided to at least one of the first sensor circuit or the second sensor circuit.

2. The electronic device of claim 1, wherein the display includes a display driving circuit,
wherein the first sensor circuit includes a touch sensor integrated circuit (IC), and
wherein the second sensor circuit includes a pen sensor IC.

3. The electronic device of claim 2, wherein the display driving circuit is configured to provide the first synchronization signal corresponding to the display driving signal to the processor and the touch sensor IC, and the touch sensor IC is configured to provide the second synchronization signal to the pen sensor IC.

4. The electronic device of claim 3, wherein the processor is configured to perform processing based on the first synchronization signal,
wherein the touch sensor IC is configured to perform touch sensing based on the first synchronization signal, and
wherein the pen sensor IC is configured to perform pen sensing based on the second synchronization signal.

5. The electronic device of claim 4, wherein the first synchronization signal and the second synchronization signal are signals preventing overlap between a touch sensing operation period of the touch sensor IC and a pen sensing operation period of the pen sensor IC.

6. The electronic device of claim 2, wherein the display driving circuit is configured to provide the first synchronization signal corresponding to the display driving signal to the processor, and provide the second synchronization signal different from the first synchronization signal to each of the touch sensor IC and the pen sensor IC.

7. The electronic device of claim 6, wherein the processor is configured to perform processing based on the first synchronization signal,
wherein the touch sensor IC is configured to perform touch sensing based on the second synchronization signal, and
wherein the pen sensor IC is configured to perform pen sensing based on the second synchronization signal.

8. The electronic device of claim 7, wherein the second synchronization signal is a signal preventing overlap between a touch sensing operation period of the touch sensor IC and a pen sensing operation period of the pen sensor IC.

9. The electronic device of claim 2, wherein the display driving circuit is configured to provide the first synchronization signal corresponding to the display driving signal to the processor and the pen sensor IC, and the pen sensor IC is configured to provide the second synchronization signal to the touch sensor IC.

10. The electronic device of claim 9, wherein the processor is configured to perform processing based on the first synchronization signal,
wherein the pen sensor IC is configured to perform touch sensing based on the first synchronization signal, and
wherein the touch sensor IC is configured to perform pen sensing based on the second synchronization signal.

11. The electronic device of claim 10, wherein the first synchronization signal and the second synchronization signal are signals preventing overlap between a touch sensing operation period of the touch sensor IC and a pen sensing operation period of the pen sensor IC, and
wherein the first synchronization signal is a synchronization signal of a first frequency, and the second synchronization signal is a synchronization signal of a second frequency.

12. An electronic device comprising:
a display including a display driving integrated circuit (IC);
a first circuit board including a touch sensor IC; and
a second circuit board connected to the first circuit board and including a pen sensor and an application processor,
wherein based on a change in a display driving signal of the display driving IC, the display driving IC is configured to provide a first synchronization signal corresponding to the changed display driving signal to the application processor, and
wherein based on the providing of the first synchronization signal corresponding to the display driving signal, a second synchronization signal different from the first synchronization signal is provided to at least one of the touch sensor IC or the pen sensor IC.

13. The electronic device of claim 12, wherein the display driving IC is configured to provide the first synchronization signal corresponding to the display driving signal to the application processor and the touch sensor IC, and the touch sensor IC is configured to provide the second synchronization signal to the pen sensor IC, or
wherein the display driving IC is configured to provide the first synchronization signal corresponding to the display driving signal to the application processor, and provide the second synchronization signal different from the first synchronization signal to each of the touch sensor IC and the pen sensor IC, or
wherein the display driving IC is configured to provide the first synchronization signal corresponding to the display driving signal to the application processor and the pen sensor IC, and the pen sensor IC is configured to provide the second synchronization signal to the touch sensor IC.

14. The electronic device of claim 13, wherein the first synchronization signal and the second synchronization signal are signals preventing overlap between a touch sensing operation period of the touch sensing IC and a pen sensing operation period of the pen sensing IC, and
wherein the first synchronization signal is a synchronization signal of a first frequency, and the second synchronization signal is a synchronization signal of a second frequency.

15. A method of providing a display-based synchronization signal in an electronic device, the method comprising:
based on a change in a display driving signal, providing, by a display of the electronic device, a first synchronization signal corresponding to the changed display driving signal to a processor of the electronic device; and
based on the providing of the first synchronization signal from the display, receiving a second synchronization signal different from the first synchronization signal by at least one of a first sensor circuit of the electronic device or a second sensor circuit of the electronic device.
